**Europäisches Patentamt**

**European Patent Office**

**Office européen des brevets**

(19)

(11) Publication number : **0 480 719 A2**

## (12) EUROPEAN PATENT APPLICATION

(21) Application number : **91309313.4**

(22) Date of filing : **10.10.91**

(51) Int. Cl.⁵ : **B41J 13/08, B07C 3/18**

(30) Priority : **11.10.90 US 596040**
**23.04.91 US 689330**

(43) Date of publication of application :
**15.04.92 Bulletin 92/16**

(84) Designated Contracting States :
**AT BE CH DE DK ES FR GB GR IT LI LU NL SE**

(71) Applicant : **BRYCE OFFICE SYSTEMS, INC.**
**115 Hurley Road, Unit 2-C**
**Oxford, Connecticut 06483 (US)**

(72) Inventor : **Hurd, Bruce E., c/o Bryce Office Sys.,**
**Inc.**
**115 Hurley Road, Bldg. 2C**
**Oxford, Connecticut 06483 (US)**
Inventor : **Eisner, Lawrence F., c/o Bryce**
**Office Sys., Inc.**
**115 Hurley Road, Bldg. 2C**
**Oxford, Connecticut 06483 (US)**

(74) Representative : **Needle, Jacqueline**
**W.H. BECK, GREENER & CO 7 Stone Buildings**
**Lincoln's Inn**
**London WC2A 3SZ (GB)**

(54) **Addressing machine.**

(57)   A feeding and transport system (13, 14) positively feeds discrete media elements (A) to be addressed (such as envelopes) past a number of print heads (16) in a positive manner to maintain consistent and proper alignment of the printed text on the media elements. First and second feed rollers (24, 30 or 138) feed the media elements (A) to a pair of pinch rollers, the operation of the first roller being interrupted once a media element reaches a predetermined position. A selector bar (33 or 132) with abrasive strips (34) or annular resilient rings (134) is associated with the second feed roller (30 or 138). The pinch rollers feed the media elements (A) onto endless transport belts (42), with transport wiper plates (62) disposed on top of the belts to hold the media elements in contact with the belts. The transport wipers comprise plates mounted by levers (69, 70) at opposite ends in such a way that an element may easily move under a plate, but is held tighter by the plate as it moves along it. At the end of the transport belts (42), an exit roller (118) holds the envelopes generally horizontal until they have almost completely cleared the belts, so that they do not smear previous envelope addresses.

Fig. 13

Jouve, 18, rue Saint-Denis, 75001 PARIS

## TECHNICAL FIELD

This invention relates generally to printing machines and, more specifically to a machine for printing high quality address information on a plurality of envelopes automatically fed through the machine.

## BACKGROUND AND SUMMARY OF THE INVENTION

There is a substantial need for machines that are capable of high speed, high quality addressing of discrete media elements, such as envelopes, cards, flats, newspapers, or the like. When media elements are directly printed rather than having address labels applied thereto, they present a much better appearance. The appearance alone may be the difference between a recipient discarding the media without even examining it carefully, or responding to the media element. The quality nature of the print also is important in order minimize postage since the printing of bar codes on media (which must be printed in a high quality manner to be effective) speeds delivery of the media and may significantly reduce postage.

According to the present invention, machinery is provided which is capable of providing high speed, high quality addressing. Utilizing the machine according to the present invention, it is possible to print near letter quality media elements at up to 10,000 per hour, and letter quality elements at up to 6,000 per hour. The media handled can be anything from 3 x 5 inches up to 12 1/4 x 24 inches and up to 1/8 of an inch thick. The print area may be adjusted within a wide range so that it is properly positioned on the media, depending upon the size and composition of the media, and is capable of printing a complete address, including the postal bar code.

The desirable results are achieved according to the invention by utilizing ink jet printers which are positioned above transport belts which move the media therepast at a high speed. The ink jet printers are mounted so that the orifices thereof will not be clogged by rebounding ink particles, yet there is no necessity for a wiper for wiping ink particles off of the print heads. The feeding and transporting system in a machine according to the invention positively feeds each of the individual media elements to and past the print heads in a precisely controlled manner so that the printing is in a uniform position on the media elements, and so that there is no slippage between the media elements and the transport mechanisms that could cause blurring or other non-uniformities in the printing quality.

Media elements are fed from a substrate by first and second feed rollers to a pair of pinch rollers and then onto a plurality of endless transport belts having transport wipers holding the edges of the media elements in positive contact with the transport belts. The first feed roller feeds the media element to the second feed roller, which in turn feeds the media element to the pinch rollers. Once the media element is between the second feed roller and the pinch rollers, operation of the first roller is terminated to ensure no double feeding. A selector bar -- the position of which is adjustable with respect to the second feed roller in order to accommodate media of different thickness -- is positioned above the second feed roller and, in accordance with one exemplary embodiment, has an abrasive strip thereon which will engage the media elements and ensure singulation thereof to the second feed roller. The selector bar may have circumferentially spaced abrasive strips so that when one strip wears out, the selector bar may be rotated so that a new abrasive strip is properly positioned with respect to the second feed roller.

In another exemplary embodiment, a plurality of O-rings are counted in axially spaced positions along the selector bar and protrude radially into correspondingly located, mating grooves formed axially along the second feed roller. This new feeder arrangement operates in two modes. For thicker media, it operates in a very similar manner to the feeder described above (as well as in commonly assigned Patent 4,858,907, the totality of which is incorporated herein by reference). In other words, the O-rings perform essentially the same function as the abrasive strip in that they hold back the leading edge of the piece of media next to the bottom of the stack while the bottom piece is fed.

For very thin media, however, the O-rings perform in a superior manner in comparison to an abrasive strip. This is particularly true with respect to media even thinner than the thinnest media that the U.S. Postal Service will accept (.007 inch). Generally, once two or more pieces of media have simultaneously passed the abrasive strip, all will be fed, and here is where the second mode of operation of the O-ring arrangement has its greatest beneficial effect. When the selector bar containing the O-rings is adjusted downward toward the grooved rubber feed roller beneath it, a series of bends are set up across the width of the media being fed. The associated retarding friction between the O-rings and the piece of media which is next to the bottommost piece is greater than the friction holding the two pieces together. The driving friction between the feed roller and the bottom piece of media is also greater than the friction holding the bottom two pieces together. As a result, the bottom piece is fed by itself and the next piece is held back by the O-rings.

The pinch rollers are biased together by loop, springs, and the surface of at least one of the pinch rollers is deformable, and the pinch rollers may move apart -- though always biased together by the loop springs -- to automatically accommodate media elements of different thickness.

Transport wipers overlay transport belts on opposite sides of the print heads. The transport wipers are mounted by leaf springs or like levers at the leading and trailing ends thereof, the leading edge -- with respect to the direction of transport -- making an angle less than the angle at the trailing edge, so that the media element may easily enter the area between the transport wiper and the transport belt, but as it moves along the wiper powered by the belt, the wiper will exert a larger force retaining it in place.

The print heads are mounted on movable platforms. Typically, seven print heads would be mounted on one movable platform, while an eighth print head -- the print head for printing bar code, or an eighth address line -- is mounted on a second platform. The position of the platforms in the horizontal direction perpendicular to the direction of transport of the media elements may be adjusted, as may the vertical spacing between the print heads mounted on the platforms and the media elements moving therepast. The vertical spacing is changed by rotation of eccentric shafts within outer tubes, with the selector bar and the mounting tubes for the print heads being positively tied together so that adjustment of the vertical spacing of one automatically adjusts the vertical spacing of the others by the same amount. The second platform may also be moved in the horizontal direction perpendicular to the direction of transport to position the eighth print head either in an operative printing location, for printing an eighth line of address, or in a location for printing bar code.

Typically, the print heads are jet printers, and in order to prevent rebounding ink from clogging the orifices thereof -- yet without requiring a wiper for wiping the ink from the orifices -- the print heads are mounted at a small angle -- e.g., about 3° -- with respect to the vertical (i.e., they make an angle of about 87° with respect to the direction of transport).

Once the media elements have moved past the print heads, and are about to be discharged into a discharge bin or tray, an exit roller is provided which holds the media elements generally horizontally until they have been almost completely discharged, so that the leading edge thereof will not engage a previously-printed media element and drag across it, smearing the printed address information thereon.

Accordingly, the present invention relates to a printing assembly for printing discrete media elements, comprising a frame; a plurality of print heads; means for mounting the print heads on the frame; transport elements for moving discrete media elements past the print heads; means for powering the transport elements to effect movement of discrete media elements in a transport direction; characterized by means for holding the discrete elements in positive, non-slipping contact with the transport elements during printing on the discrete elements by the print heads, the holding means comprising at least one transport wiper comprising a smooth surfaced plate having first and second ends spaced from each other in the transport direction with the first end preceding the second end in the transport direction, and lever means mounting the plate to the frame at the first and second ends thereof so that the plate may move in a direction perpendicular to the transport direction toward and away from the transport elements.

In another aspect, the invention relates to a printing assembly for printing discrete media elements, comprising a plurality of ink jet print heads which project ink in a first direction from an orifice; means for mounting the print heads; transport elements for moving discrete media elements past the print heads; means for powering the transport elements to effect movement of discrete media elements in a second direction; and characterized by the print head mounting means mounting the print heads above the transport elements so that the first direction is disposed with respect to the second direction, and so that the print heads are spaced from the transport elements generally in the first direction, so that ink projected by the print heads will not rebound toward the print heads and clog the orifice: thereof, yet the print heads will print clearly defined characters.

It is the primary object of the present invention to provide for the high-speed, high-quality addressing of media elements. This and other objects of the invention will become clear from an inspection of the detailed description of the invention, and from the appended claims.

## BRIEF DESCRIPTION OF THE DRAWINGS

FIGURE 1 is a perspective exterior view of an exemplary machine according to the present invention;

FIGURES 2a and 2b are a side view, with the cover of the machine removed, of internal components of the machine of FIGURE 1;

FIGURE 3 is a detailed side view showing the discharge end of the machine of FIGURE 1 in operative association with a catch tray or bin;

FIGURES 4a and 4b are a top plan view of the internal components of the machine seen in FIGURES 2a and 2b;

FIGURE 5 is a side view of detailed components associated with the selector bar and first feed roller of the apparatus of FIGURES 1, 2a, 2b, 4a and 4b;

FIGURE 6 is a side view of an exemplary transport wiper of the apparatus of FIGURE 2a;

FIGURE 7 is a top plan view of the transport wiper of FIGURE 6;

FIGURE 8 is a cross-sectional view -- taken along lines 8-8 of FIGURE 7 -- of the transport wiper of FIGURE 7;

FIGURE 9 is a detailed view of the front of the wiper of FIGURE 6;

FIGURE 10 is a side view showing the exemplary movement and relative positioning of the components of an exemplary transport wiper according to the invention;

FIGURE 11 is a control schematic for some of the component parts of the machine of FIGURES 2 and 4;

FIGURE 12 is a side schematic view showing an exemplary mounting of the print heads according to the invention with respect to the direction of transport 21;

FIGURE 13 is a top plan view of the carriage for seven print heads, with the wipers shown underneath it, in dotted line;

FIGURE 14 is a top plan view of the carriage for an eighth print head;

FIGURE 15 is a front view of a selector bar and cooperating feed roller in accordance with a second exemplary embodiment of the invention and of the type incorporated in the machine shown in Figures 2a and 2b with other parts removed for the sake of clarity;

FIGURE 16 is a partial front view of the selector bar shown in Figure 15;

FIGURE 17 is an enlarged end view of the selector bar and cooperating feed roller shown in Figure 15 with the further addition of a stack of media to be fed;

FIGURE 18 is a side view of detailed components associated with the selector bar and second feed roller in accordance with the invention;

FIGURE 19a is a side view of an end cap component used with the selector bar of Figure 15;

FIGURE 19b is a front view of the end cap shown in Figure 19a;

FIGURES 19c and 19d are front views of a locating plate and access plate, respectively, used with the selector bar of Figure 15;

FIGURE 20 is an enlarged partial front view of a portion of the selector bar and feed roller illustrated in Figure 15 with thin media being fed therebetween; and

FIGURE 21 is an enlarged partial front view of a portion of the selector bar and cooperating feed roller illustrated in Figure 15 but with thicker media being fed therebetween.

## DETAILED DESCRIPTION OF THE DRAWINGS

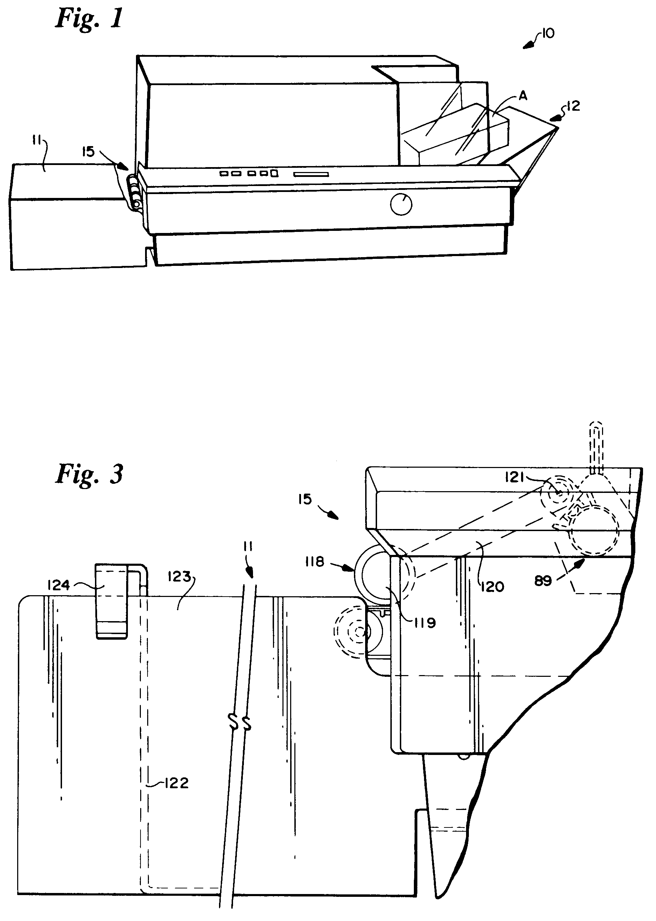

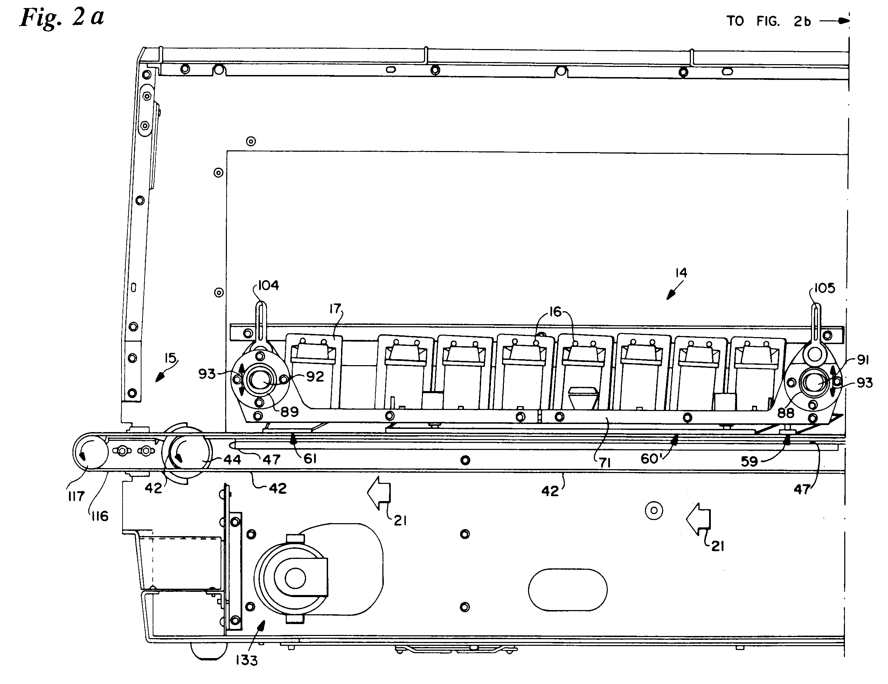

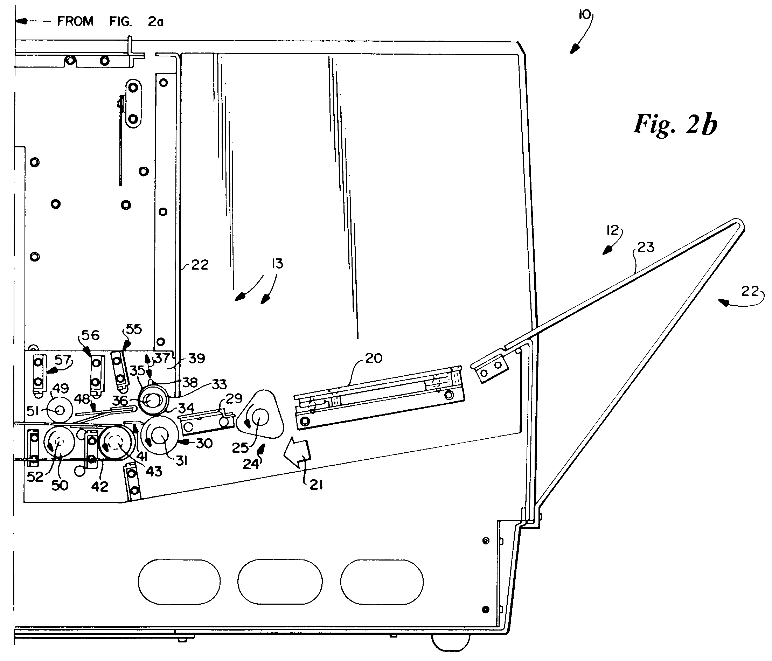

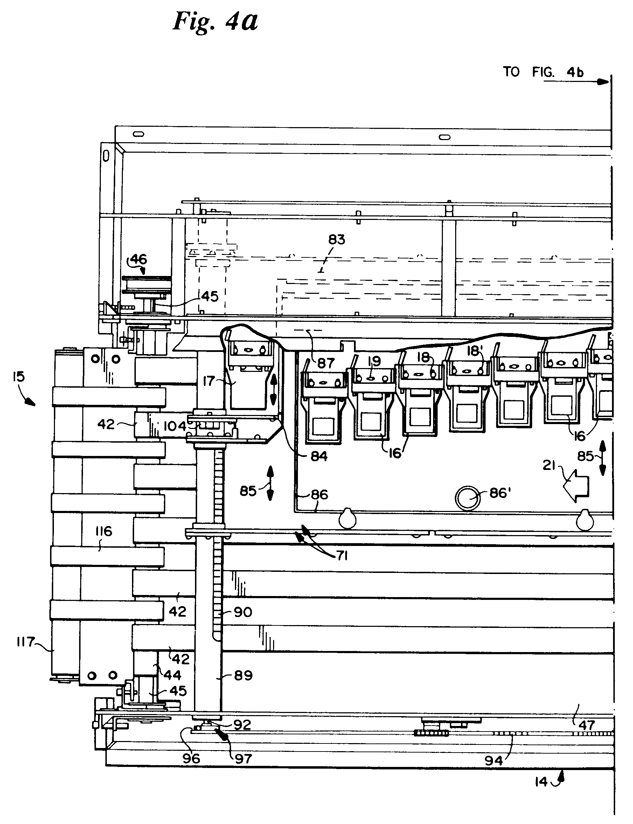

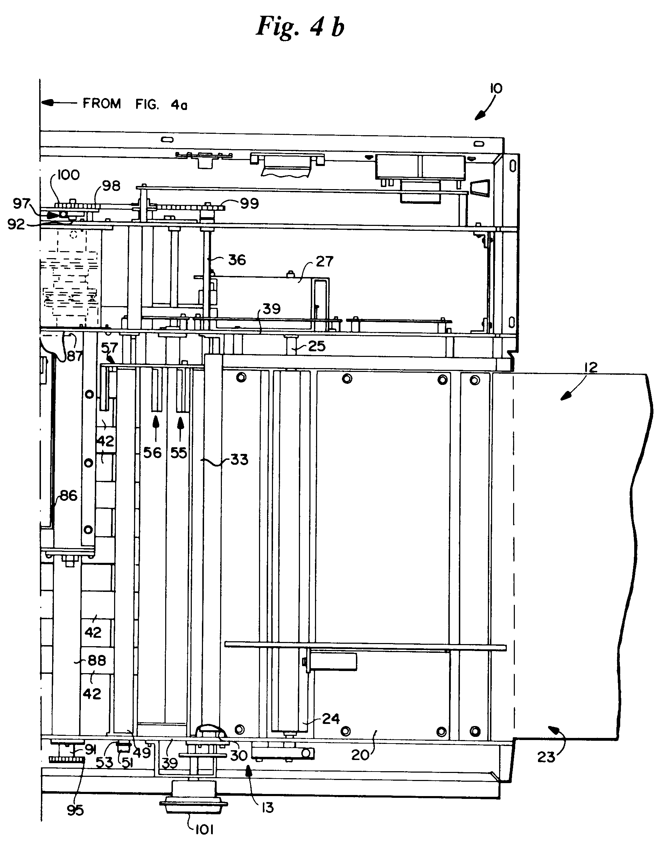

An exemplary machine according to the present invention is shown generally by reference numeral 10 in FIGURE 1, 2 and 4. The machine 10 is preferably adapted to be used with a catch tray 11, or a conveyor (FIGURES 1 and 3). Media elements A (see FIGURE 1) to be addressed are fed in at the entry end 12 of the machine 10, are engaged by the feeding means 13 to be fed to the transport means 14, and ultimately discharged from the exit end 15 of the machine 10. The transport means 14 moves the discrete media elements past a plurality of print heads, such as a first group of print heads 16, and a separate print head 17 (see FIGURES 2 and 4). The media elements A may comprise envelopes, cards, flats, or newspapers, or the like. Typically, the media elements may have size ranging from 3 x 5 inches up to 12 1/4 x 24 inches, with a thickness of up to 1/8th inch. Except for details of operation of the feed rollers, the details of the selector bar, and the positioning of sensors, the inlet 12 and feeding means 13 are substantially identical to those shown in U.S. Patent No. 4,858,907, the disclosure of which is incorporated by reference herein. The positions of the heads 16 may be adjusted with eccentric screws 19 moving the heads as pins 18 move in elongated slots 18'.

At the inlet end 12 of the machine 10 a substrate 20 is provided upon which the media to be printed rests. Exteriorly of the substrate 20 (that is upstream thereof in the direction of the media transport 21) is a bin extension 22, having a support surface 23 thereof that makes an angle with respect to the substrate 20 so as to be effective to take some of the weight of the stack media elements off the bottom element which engages the substrate 20. The substrate 20 cooperates with the feed wall 23 against which the leading edges of the media elements are stacked.

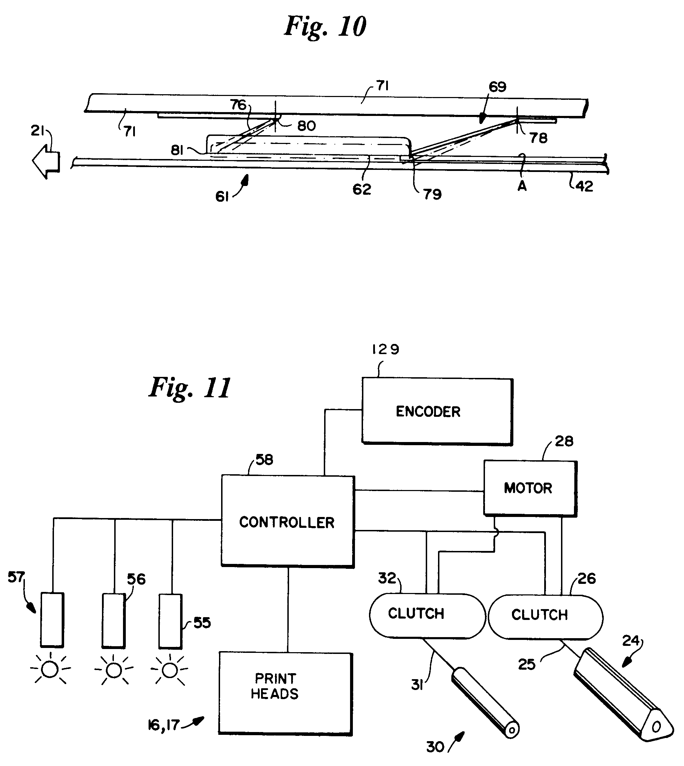

Adjacent the substrate 20 in the direction of transport 21 is a first or upper feed roller 24 which preferably has a non-circular (e.g., rounded apex triangle) cross-sectional configuration, and it is rotatable about a shaft 25 extending in a horizontal dimension essentially transverse to the direction of transport 21. The direction of transport 21 preferably is also horizontal. The shaft 25 is connected to a clutch 26 (seen schematically in FIGURE 11) mounted by a clutch bracket 27 (see FIGURE 4), the clutch being connected up to a motor 28 (see FIGURE 11) for powering it.

Downstream of the first feed roller 24 in the direction of transport 21 is the support surface 29, and then next to that a second or lower feed roller 30. The roller 30 is mounted for rotation about shaft 31, the shaft 31 being parallel to the shaft 25 perpendicular to the direction of transport 21. The shaft 31 is connected up to a second clutch 32 (see FIGURE 11) distinct from the first clutch 26, but also powered by motor 28. The clutch 32 is also preferably mounted by bracket 27.

Mounted above the second feed roller 30 in operative association therewith is a selector bar 33. The selector bar 33 does not rotate, but rather provides a stationary guide for singulating the media elements A during guiding of the media elements from the surface 29 into operative association with the rotating periphery of the second feed roller 30. To facilitate this guiding function, the selector bar 33 preferably has a first abrasive strip 34 on the outer periphery thereof, and positioned as illustrated in FIGURE 2 -- that is, just above and to the inlet side of the topmost rotating portion of the circumference of the feed roller 30. The abrasive strip 34 may be any conventional abrasive material that is bound with an adhesive or the like to the external surface of the bar 33, and extends essentially parallel to the shaft 31. Since the abrasive of the strip 34 will eventually be worn away, it is preferable to provide a second abrasive strip 35 on a circumferential portion of the selector bar 33 remote from (e.g., 180°) the strip 34 so that the selector bar 33 may be repositioned with the strip 35 in place of the strip 34, and thereby the life of the selector bar 33 -- before it need be sent back to the factory for refurbishment -- may be doubled.

The selector bar 33 in one exemplary embodiment comprises an outer tubular component which has the abrasive strips 34, 35 thereon and includes an inner eccentric shaft 36 which engages the exterior tube of the bar 33. Rotation of the eccentric shaft 36 effects movement of the bar 33 toward and away from the second feed roller 30 in dimension 37 (see FIGURE 2), in mounting slots 38 within side plates 39 mounting the selector bar 33. This allows adjustment of the spacing between the bar 33 and the second feed roller 30 to accommodate media elements A of different thicknesses, e.g., from extremely thin paper sheets, to newspapers up to 1/8th inch thick.

From the second feed roller 30, the media elements A being transported are fed over a bridge piece 41 to transport section 14, which will transport the media elements past the print heads 16, 17. The transport elements within the section 14 preferably comprise a plurality of spaced (in the dimension of elongation of the shafts 25, 31) endless transport belts 42 which are mounted at the first end thereof in the transport direction 21 by an idler roller 43, and at the furthest end thereof in the transport direction 21, adjacent the discharge 15, by a powered roller 44. The axes of rotation of the rollers 43, 44 are parallel to the shafts 25, 31 (i.e., substantially perpendicular to the transport direction 21). The axis of rotation of the drive roller 44 is defined by shaft 45 (see FIGURE 4), which is connected to a belt and pulley assembly 46 or the like to the motor 28. The uppermost portion of each endless transport belt 42, at the area thereof adjacent the print heads 16, 17, rides over a belt support plate 47.

A guide assembly 48 may be provided above the inlet portions of the belts 42 to help guide media element A into the transport section 14, and in order to assist in clearing media elements from the feeding section 13 to the transport section 14 while preventing slippage with respect to the belts 42, upper and lower pinch rollers 49 and 50 preferably are provided. The pinch rollers 49, 50 preferably are constructed such as disclosed in U.S. Patent No. 4,858,907, being rotatable about shafts 51, 52 which are parallel to the rollers 43, 44 and shafts 31, 25, with loop springs 53 (see FIGURE 4) at opposite ends thereof biasing the shafts 51, 52 and the rollers 49, 50 toward each other -- except that the loop springs 53 exert the same force, instead of differential forces as in said patent. The shaft 51 is mounted in a vertically-elongated slot (not shown) inside plates 39 so that it may move toward and away from the roller 50, under the bias of loop springs 53 to automatically accommodate media elements A of different thicknesses. Preferably, the surface of at least one of the elements 49, 50 is deformable (e.g., has an elastomeric material thereon).

Mounted between the second feed roller 30 and the pinch rollers 49, 50 are first and second photosensors 55, 56, and mounted just downstream of the pinch rollers 49, 50 in the transport direction 21 is a third photosensor 57. These photosensors sense the position of media elements A, or the leading and trailing edges thereof, to control various components through a controller 58 (see FIGURE 11), as will be hereinafter described.

In the transport section 14, it is very important that the media elements A be held in proper position with respect to the belts 42, and the print heads 16, 17. No slippage between the media element and the belt can occur if the printing is to be distortion free and precisely aligned from piece to piece, and within each piece. In order to accomplish this important-function, transport wipers are provided. The pinch rollers 49, 50 feed each of the media elements A into operative association with the transport wipers. In the preferred embodiment illustrated in the drawings, e.g., see FIGURE 2a, an entry transport wiper 59, one or more (e.g. four) main transport wipers 60 (e.g. 60, 60'), and one or more exit transport wipers 61 (e.g. 61, 61') are provided.

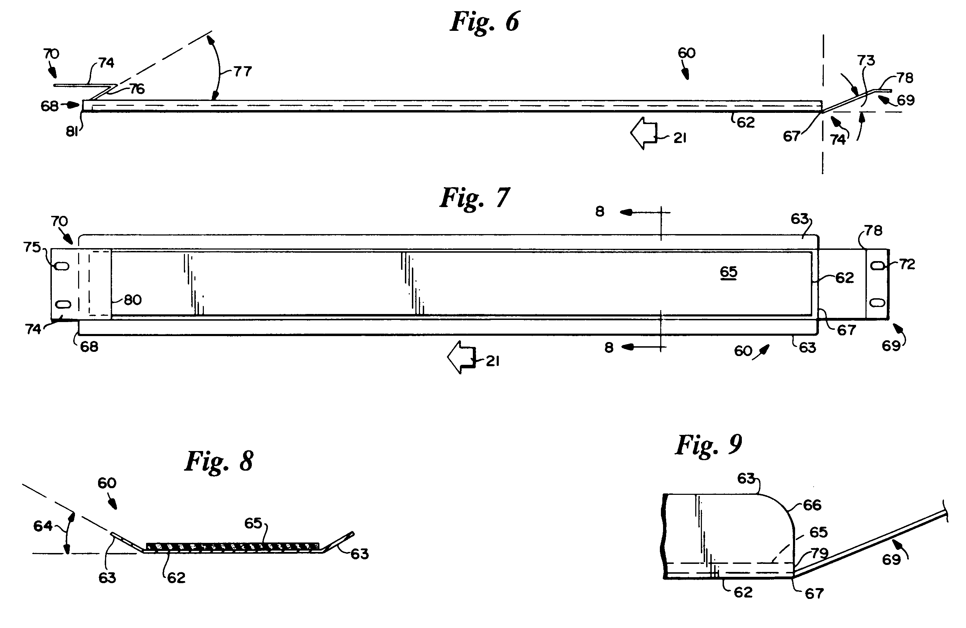

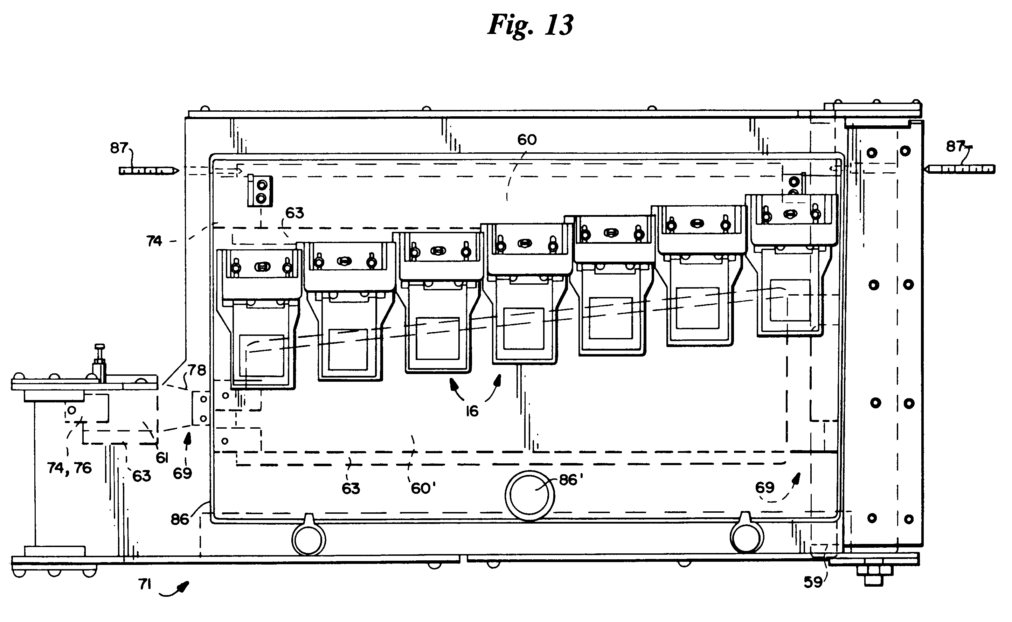

Details of exemplary transport wipers according to the invention are illustrated in FIGURES 6 through 10. The main transport wiper 60 is illustrated most clearly in FIGURES 6 through 9, and main wiper 60' is seen in FIGURES 2a and 13 while the trailing wiper 61 is illustrated in FIGURES 10 and 13. The only significant difference between the wipers 60, 60', 61, 61' is their length, width, and shape. The entry transport wiper 59 is like the wipers 60, 60', 61, 61' except that it does not have a trailing lever.

The transport wiper 60 comprises a plate 62 having a very smooth bottom surface, adapted to engage the media element A and/or belt 42. A particularly desirable material is stainless steel, e.g., a .006 inch thick stainless steel plate with a very smooth bottom surface finish. While the dimensions are not particularly critical, the plate 62 typically could have a width of about 1.15 inches, approximately the width (or more than) one of the belts 42 (e.g., the belts 42 may have a width of about one inch and a spacing between them of about one inch). It is necessary for the width of the plate 62 is greater than the spacing between the belts 42. The side edges of the plate 62 are turned up to form flanges 63 which make a positive angle 64 (e.g., about 30°) with respect to the horizontal so that if the wiper assemblies 60, 60', 61, 61' are moved in a horizontal dimension parallel to the rollers 43, 44 (perpendicular to the side edges of the belts 42), they will not engage the edges of the belts and cause damage. The top surface of each of the plates 62 preferably has a sound dampening material, e.g., an elastomeric or acoustical material, 65 provided thereon to minimize vibration noise. Also, the leading and trailing ends of the flanges 63 are radiused, as illustrated at 66 in FIGURE 9.

The plates 62 have a first end 67 which is the leading end in the direction of travel 21 of the media elements A, and a second end 68 which is the trailing end in the transport direction 21. The plate 62 is mounted so that the leading end 67 thereof may be cammed upwardly by a media element A more easily than the trailing end 68 thereof. This is accomplished by utilizing lever means, such as lever elements 69, 70, mounting the plates 62 to the carriage frame 71 for the print heads 16. The leading end lever 69 preferably is formed with a leaf spring material or the like, and has the leading end thereof attached by screws passing through opening 72 (see FIGURE 7) into the carriage 71, the main body of the lever 69 extending rearwardly downwardly therefrom to connection to the front of the plate 62 (or being integral therewith), and making an angle 73 with respect to the transport direction 21. The trailing lever also is formed of leaf spring material, or the like, and has a mounting portion 74 thereof which is connected by screws passing through opening 75 (see FIGURE 7) to the carriage 71, with the actual lever arm portion 76 thereof extending from the leading edge of the mounting plate 74 to the trailing edge 68 of the plate 62. The lever 76 makes an angle 77 with respect to the transport direction 21. Levers 69, 76 need not be articulated, but rather pivot points will necessarily be provided at the portions 78, 79, 80 and 81 thereof. While the angles 73, 77 will change as the plate 62 pivots about lever arms 69, 70, initially the angle 73 is substantially less than the angle 77 so that the leading edge 67 of the plate 62 is easily cammed upwardly by a discrete media element A, while as the element A moves in the direction of transport 21, the downward biasing force provided by the plate 62 to clamp it to the belt 42 increases. In one exemplary embodiment, the angle 77 is about 30°, while the angle 73 is about 15°.

Figure 10 schematically illustrates operation of one of the transport wipers, in this case, the exit transport wiper 61, the movement of the longer entry lever 69, shorter exit lever 76 and plate 62 with respect to the belt 42 being shown as a media element A (e.g., envelope) to be printed cams the wiper plate 62 upwardly as it is moves in the transport direction 21.

The initial position of the wiper 61 is shown in dotted line, and its cammed upward position in solid line in FIGURE 10.

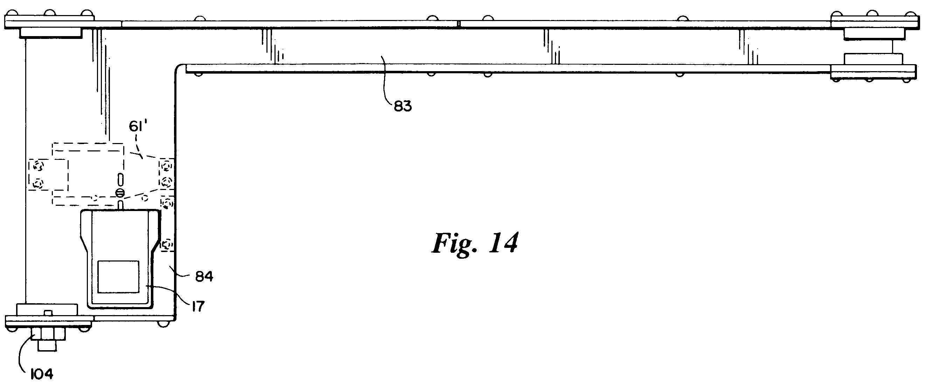

The main frame or carriage 71 for mounting the print heads 16, mounts all of the print heads except for one (that is, the seven print heads 16 illustrated in FIGURES 4a and 4b), while the second carriage 84 mounts the other print head 17, having an extension 83 (see FIGURES 13 and 14) going around carriage 71. Note the relative positions between the print heads 16 in both the direction of transport 21 and the dimension of elongation of the shaft 25 and associated parallel elements (i.e., see dimensional arrows 85 in FIGURE 4). A pivoted cover 86, pivoted about a pivot pin 87, may be provided for mounting the print heads 16, and which can be swung up about the pivot pin 87 using handle 86' for pivoting the print heads 16 out of the way, for cleaning.

Typically, the print heads 16 print seven address lines, while the print head 17 either prints an eighth address line, or bar code. It is held adjacent the bottom of the media to be printed and away from the heads 16 when printing bar code. Where the printer 17 prints bar code, it is preferred that the controller 58 scan the address information fed to the machine 10 for valid zip code information, and create the bar code from the zip code information and thereby control the printer 17. This, and various other control aspects of the components according to the invention, may be the same as in FIGURES 11 through 13 of said U.S. Patent No. 4,858,907.

The carriage 71 is mounted for movement in the dimension 85 by carriage support tubes 88, 89. A scale 90 preferably is provided on the support tube 89 to indicate the positioning of the carriage 71 along the tubes 88, 89 --i.e., in the dimension 85. The transport wipers 60, 60', 61, 61 are preferably provided on both side edges of the carriage 71 (that is, on opposite sides of the print heads 16), as seen in FIGURE 13. Since the wipers are wider than the space between the belts 42, when positioning the carriage 71 in the dimension 85 care need not be taken to see that wipers 59-61 are in substantial registry with a transport belt 42. This movement in dimension 85 can be as much as seven inches, allowing precise positioning of the printing area for a wide variety of different types and sizes of printing media A. The carriage 84 can be slid on tubes 88, 89 too, and the carriage 84 may be moved relative to carriage 71 to position head 17 to print eight lines of address, if desired.

It is important to be able to adjust the spacing of the print heads 16, 17 vertically -i.e., from the surface of the media elements A that are to be printed. This is accomplished by providing eccentric shafts 91, 92 within the tubes 88, 89. The eccentric shafts 91, 92 engage the tubes 88, 89 so that rotation of the shafts 91, 92 results in movement of the entire carriage 71 in the dimension perpendicular to the direction of transport 21 and the horizontal dimension 85 (e.g., vertically -- see dimensional arrows 93 in FIGURE 2a). The shafts 91, 92 have the same eccentricity as the shaft 36 associated with selector bar 33, and all of the shafts 36, 91, 92 are mounted together so that the spacing between the print heads 16 and the transport belts 42 (and the media A supported thereby), as well as the spacing between the selector bar 33 and the second feed roller 30, will always be proportional, e.g., the spacing between the selector bar 33 and the feed roller 30 will be substantially equal to the thickness of the media element, while the spacing from the print head 16 on the top of the transport belts 42 will be thickness of the media element A plus the desired distance the print head 16 is normally provided above the top surface of the media element A.

The simultaneous adjustment of the spacings of the elements 33, 88, 89 is accomplished by tying the tubes 88, 89 together with an anti-backlash chain 94 (see FIGURE 4a) extending between sprockets 95, 96 connected to shaft 91, 92 by adjustable locking collars 97, and by tying shaft 36 to shaft 92 utilizing anti-backlash chain 98 connected between sprockets 99, 100, again with an adjustable locking collar 97. Then, by rotating control knob 101, connected to shaft 36, the shafts 36, 91 and 92 are simultaneously rotated a known amount so that the desired proportional spacings are always maintained.

The carriage locks 104, 105 are provided mounted on the carriage 84, 71, respectively, in association with the tubes 89, 88, respectively, to hold carriages 84, 71, respectively, in a position in which they have been moved in the dimension 85 with respect to the tubes 88, 89. When the carriage locks 104, 105 are rotated 90° from the position illustrated in FIGURE 2a, they hold carriages 71 and 84 in place with respect to the tubes 88, 89, while in the position as illustrated in FIGURE 2a, they allow relative movement therebetween.

FIGURE 12 schematically illustrates the particular positioning of each of the ink jet print heads 16 (and 17) according to the invention with respect to the direction of transport 21, and the vertical 93. FIGURE 12 schematically illustrates a conventional ink jet print head 16 having a plurality of orifices or nozzles 107 arranged in banks 108, 109 in the dimension 85. If the nozzles 107 are mounted so that a stream of ink issuing therefrom -- illustrated by line 110 in FIGURE 12 -- is perpendicular to the media element A, rebounded ink -- illustrated by reference numeral 111 in FIGURE 12 -- will rebound directly up to the orifices or nozzles 107, and eventually clog them unless some sort of a wiper is provided. The necessity for a wiper is avoided according to the invention by mounting the orifices 107 so that the rebounded ink path 111 does not impact them. This is accomplished by mounting the print head 16 so that the center lines of the banks 108, 109 of orifices or nozzles 107 (which are in line with the ink streams 110) are not perpendicular to the direction of travel 21 (i.e., the surface of the transport belts 42). That is, there is a small anglular deviation 112 from the vertical 93, which angle 112 may be about 3°. That means that the angle 113 of the ink stream 110 with respect to the direction of transport 21 is about 87° (90° minus 3°).

As the media elements A being printed move past the print heads 16, 17, they move toward the exit end of the machine 10. The elements A preferably are discharged from the belts 42 onto the belts 116, which extend between the drive roller 44 and an idler roller 117. As seen in FIGURE 3, an exit idler roller 118 is preferably associated with the belts 116 and idler roller 117 to control the orientation of the elements A as they move out of the discharge end of the machine 10 into the bin or tray 11. The exit idler roller 118 rotates about an axis elongated in the dimension 85, being mounted at one end thereof by a weight 119 connected to lever arm 120 which in turn is connected by pivot pin 121 to tube 89. The idler exit roller 118 is right at the very end of the belt 116 so it has a tendency to keep the discharge media elements substantially horizontal until just before final discharge thereof. This means that they will not have a tendency to drape down into the bin 11, and possibly have the leading edge thereof dragged across the printed address information on the previously discharged media element A, which would result in smudging thereof. The bin 11 preferably has an adjustable backstop 122 which is held in place along the tray sidewalls 123 by locking tab or tabs 124, the backstop 122 being positioned so that media elements A exiting the machine 10 hit it and drop vertically down into the bin 11, again to minimize the possibility of smearing of wet ink applied by the print heads 16, 17.

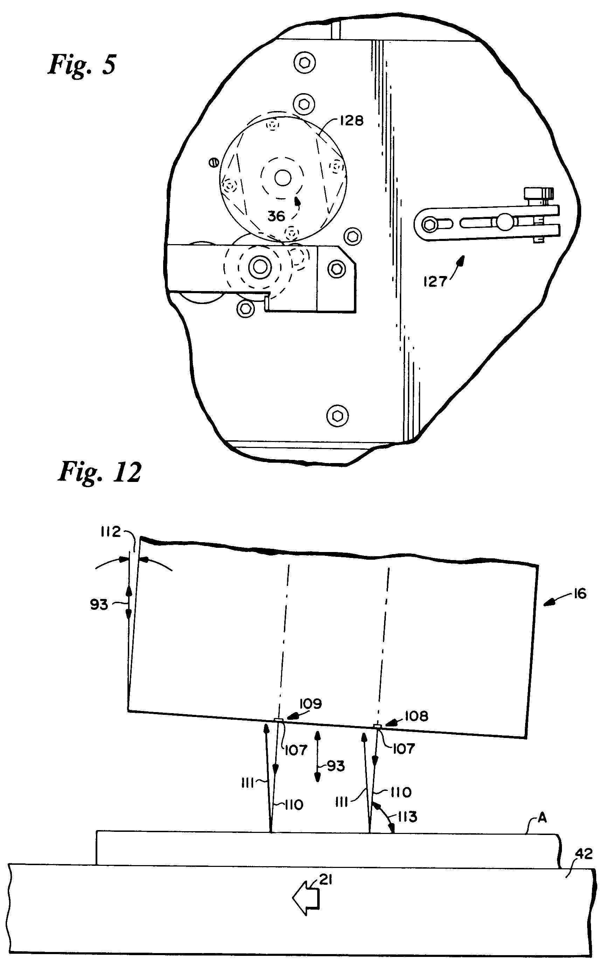

Various other features of the exemplary machine 10 according to the invention which have not heretofore been described, which may be utilized therein for maximum utility, are illustrated in FIGURE 5. FIGURE 5 shows a friction brake 127 which may be associated with the first feed roller 24 to stop rotation of the first feed roller 24 due to its own inertia, thereby preventing misfeeding of short media elements A. FIGURE 5 also illustrates a locating plate 128 associated with eccentric bar 36. A similar locating plate is associated with eccentric shafts 91, 92. Such locking plates 128 hold the shafts 36, 91, 92 in the predetermined relative positions in which they have been placed at the factory for the appropriate parallelness with the elements beneath them. Thus, they allow removal of the selector bar 33 and tubes 88, 89, and reinstallation, without requiring new parallelness adjustments.

The apparatus according to the invention may also include an encoder 129 (see FIGURE 11) mounted on the transport belt idler shaft so that any belt slippage which may occur on the driven belt shaft will not affect printing quality. Also, a motor encoder 133 (see FIGURE 2) may be provided for controlling the motor speed -- that is, keeping the motor speed constant.

## OPERATION

An exemplary unit 10 according to the invention having been described, an exemplary operation thereof in the printing of an envelope (discrete media element A) will now be provided.

A stack of envelopes is placed on the support surface 20 and extension 23, and the machine is started. The motor 28 drives clutches 26 and 32 so that the feed rollers 24, 30 start rotating, and the bottom envelope in the stack is engaged by the first feed roller 24 and driven in the transport direction 21, so that it impacts the abrasive strip 34 on selector bar 33, and moves into contact with the upper rotating surface of the second feed roller 30. The second feed roller 30 drives it over the bridge 41, and under the photosensors 55, 56 into contact with the pinch rollers 49, 50. In one exemplary (only) operation, the leading edge of the envelope passing past photosensor 56 causes the controller 58 to disengage the clutch 26 so that the first feed roller 24 no longer rotates, and it is quickly brought to a halt by the friction brake 127. The second feed roller 30 substantially continues feeding, however, and when the trailing edge of the envelope passes the photosensor 55, the controller 58 engages the clutch 26 to again start rotation of the first feed roller 24, to start the movement of the next envelope in the stack in the transport direction 21. Feed roller 30 operation may be arrested for a short period of time, however, if desired, using clutch 32.

The pinch rollers 49, 50 hold the envelope tightly on the belts 42 until the trailing edge thereof clears the feed rollers 24, 30 and the leading edge is guided under the entry transport wiper 59. The spacings between the rollers 24, 30, and 30, 49/50, and between the rollers 49/50 and the leading transport wiper 59 are preferably shorter than the shortest length media (e.g., 3 x 5 cards) intended to be transported. However, the feeding action is so positive according to the invention that even media less than 5 inches in length can be transported and printed.

As the envelope is fed past the photocell 57, the "counting" process for printing is started, the controller 58 controlling the print heads 16, 17 in response to the sensed position so that ink is issued from the nozzles or orifices 107 of the print heads 16, 17 and applied to the envelope in appropriate address lines. Because of the tilted orientation of the print heads 16, 17 the orifices 107 therein will not clog as a result of rebounding ink.

Once the leading edge of the envelope passes under the transport wiper plate 62 of wipers 60, 60′ -- which is relatively easy due to the small angle 73 -- the force holding it increases along the length of the wiper plate 62, so that the envelope is held precisely in place, without any slippage with respect to belts 42, until it passes through the entire printing operation. Ultimately, the envelope passes to belts 116 and it is held by exit roller 118 so that it is substantially horizontal until almost to the point of impact on backstop 122, at which time it falls downwardly into the tray 11, without having smeared the earlier printed envelope.

When it is desired to print envelopes of a different size or thickness, the control knob 101 is rotated to provided the desired gaps between the selector bar 33 and second feed roller 30, and between the print head orifices 107 and transport belts 42; and the levers 104, 105 are operated to allow movement of the carriages 71, 84 in the dimension 85 to properly position the print heads 16, 17 with respect to the new size of envelopes so that the address will be printed in the correct location.

## ALTERNATIVE EMBODIMENT

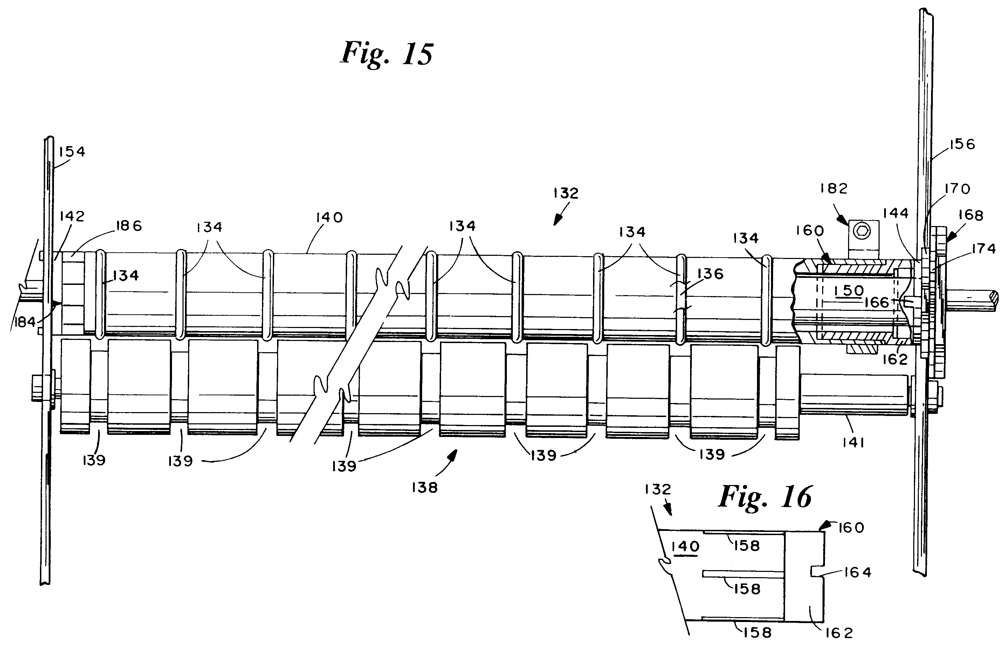

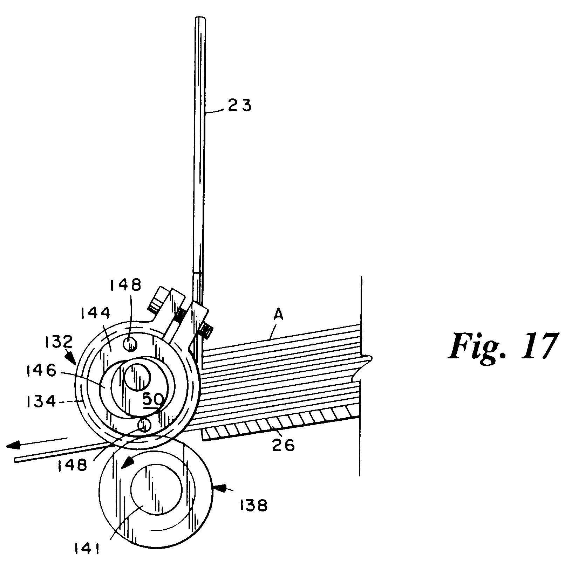

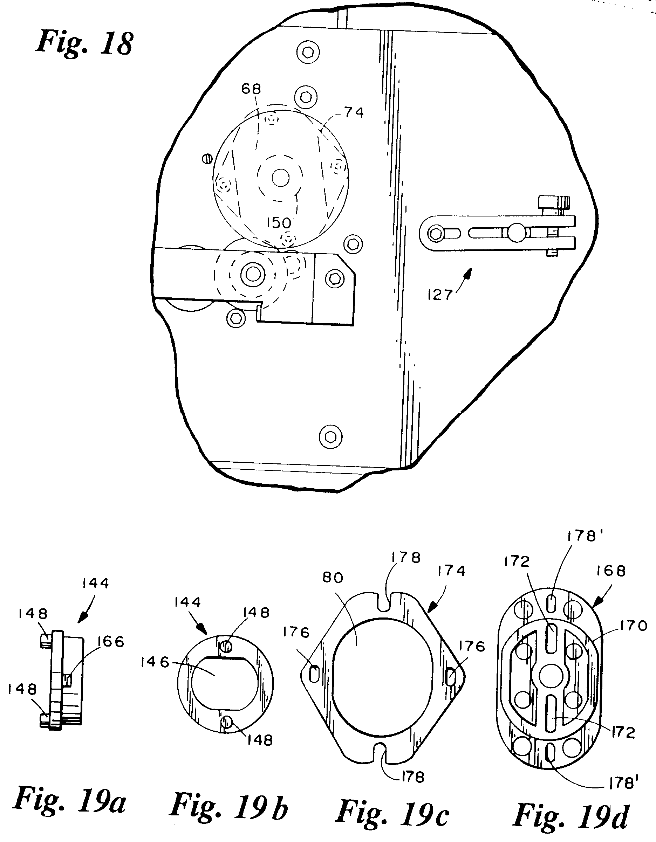

In a second exemplary embodiment of the invention, illustrated in Figures 15-21, the selector bar 132 (corresponding to the previously described selector bar 33) has a plurality of resilient, annular friction rings, e.g., rubber O-rings 134, spaced axially along the outer periphery thereof in relatively shallow grooves 136 (one partially shown in Fig. 15) formed in the exterior surface of the selector bar, as best seen in FIGURES 3 and 4. The O-rings 134, employed in place of abrasive strips 34, 35, are positioned just above the topmost rotating portion of the circumference of the feed roller 138 mounted on shaft 141 (corresponding to previously described feed roller 30 and shaft 31, respectively). The manner in which this positioning is accomplished is explained below. Feed roller 138 is formed with a like number of peripheral grooves 139 correspondingly axially spaced along the feed roller 138 so as to receive the radially protruding O-rings 134.

Since the engaged portions, i.e., rounded control surfaces, of the O-rings 134 will eventually wear (forming a flat spot, for example), an arrangement is provided which permits the selector bar 132 to be rotated about its axis so that unused serpents of the O-rings 134 can be located to face. the feed roller 138, allowing this improved feed mechanism to last four to five times longer than the previously disclosed selector bar before the expendable elements, i.e., the O-rings, need replacement.

The selector bar 132 preferably comprises an outer tubular component 140 which has a pair of end caps 142, 144, each having an elongated slot 146 and a pair of diametrically opposed guide pins 148, the width of the slot 146 sized to snugly receive an interior, eccentric shaft assembly 150 which, when rotated, effects movement of the bar 132 toward or away from the second feed roller 138 (as in dimension 37 in FIGURE 2). In this regard, the selector bar 132 is confined to substantially vertical movement by reason of the sliding engagement of pins 148 within substantially vertical slots provided within the machine plate 154 on the left side of the selector bar (Fig. 15), and within vertical slots in an access plate mounted to the machine plate 156 on the right hand side of the selector bar (plates 154, 156 correspond generally to machine plates 39 previously described). This mounting arrangement allows adjustment of the spacing between the bar 132 and the second feed roller 138 to accommodate media elements A of different thicknesses, e.g., from extremely thin paper sheets less than .007 inch thick, to newspapers up to .125 of an inch thick.

With reference especially to FIGURE 16, the right hand end of selector bar tube 140 is formed with four axially extending slits 158 (three shown) spaced equally about the circumference of the tube, and received over a stepped diameter adjustment insert 160 which, in turn, receives the end cap 144. The slit configuration allows the selector bar to be tightly clamped to the adjustment insert as described further below. The larger diameter end 162 of the adjustment insert 160 is provided with two, diametrically opposed notches 164 (one shown in Fig. 16) which are designed to receive a corresponding pair of anti-rotation tabs 166 formed on the end cap 144.

With reference now to FIGURES 15, 18 and 19, machine plate 156 is formed with an aperture for receiving the selector bar mounting apparatus. Specifically, an access plate 168 of generally elliptical or rounded elongated shape is provided with a similarly shaped projecting portion 170, the inside face of which includes vertically aligned elongated slots 172 which receive the guide pins 148 of end cap 144, thereby permitting the cap 144 and selector bar 132 to move towards and away from second feed roller 138 via rotation of the shaft assembly 150 as described above.

Between the access plate 168 and outer surface of the machine, there is a relatively thin locator plate 174 having an aperture 180 shaped to receive projecting portion 170 of plate 168. Machine plate 156 has an identical aperture to receive projecting portion 170 of plate 168. The access plate 168 is held to the front surface of machine plate 156 with two screws passing through slots 178′ and slots 178 of the locator plate 174. The locator plate 174 is fastened to the front surface of machine plate 156 with two screws passing through slots 176. Engagement of guide pins 148 of end cap 174 with slots 172 of access plate 168 and engagement of anti-rotation tabs 166 of end cap 144 with the notches 164 in adjustment insert 160 prevent relative rotation between access plate 168, end cap 144 and adjustment insert 160.

As described above, the mounting arrangement permits vertical movement of the selector bar 132 upon rotation of shaft assembly 150, but prevents relative rotation between adjustment insert 160, end cap 144 and access plate 168 on the one hand, and locator plate 174 and machine plates 154, 156 on the other. By removing the access plate 168, the selector bar 132 (with end cap 144) may be slidably removed from the machine for maintenance and/or replacement. Locator plate 174 will remain fixed to the machine plate 156 to insure proper parallel alignment (relative to feed roller 138) of the selector bar upon reassembly.

The end cap 142 on the left hand side of the selector bar 132 as viewed in FIGURE 15 is also provided with guide pins (not shown) but without the anti-rotation tabs 166. This arrangement permits relative rotation between the selector bar 132 and end cap 142 for the purpose described below.

A conventional locking collar or clamp 182 is slidably received over the tubular component 140 to a position where it overlies slits 158 of the tube and the adjustment insert 160. By the above described arrangement, locking collar 151, when tightened, prevents any rotation of selector bar 132 relative to end caps 142, 144 and adjustment insert 160, while allowing vertical movement of the selector bar assembly via rotation of shaft assembly 150 for the purpose of adjustment toward or away from feed roller 138. The collar 182 may be loosened, however, and selector bar 132 may then be rotated relative to end caps 142, 144 as well as the adjustment insert 160 so that fresh or unused portions of the O-rings 134 can be rotated to a position adjacent the second feed roller 138.

To assist in determining the extent of rotation of the selector bar 132 necessary to present a completely new portion of the O-rings 134 to the feed roller 138, a permanent indicator 184 is provided on the end cap 142. At the same time, scale markers 186 are provided on the tubular portion 140, the distance between adjacent scale markers corresponding to the amount of rotation required to present fresh portions of the O-rings 134 to the feed roller 138.

The second embodiment, incorporated in the machine earlier described with respect to the first embodiment, operates as follows. A stack of envelopes (media A) is placed on the support surfaces 20, 26 and extension 23, and the machine is started. The motor driven clutches cause feed rollers 24, 138 to start rotating, and the bottom envelope in the stack is engaged by the first feed roller 24 and driven in the transport direction 21, so that it impacts the O-rings 134 on selector bar 132, and moves into contact with the upper rotating surface of the second feed roller 138.

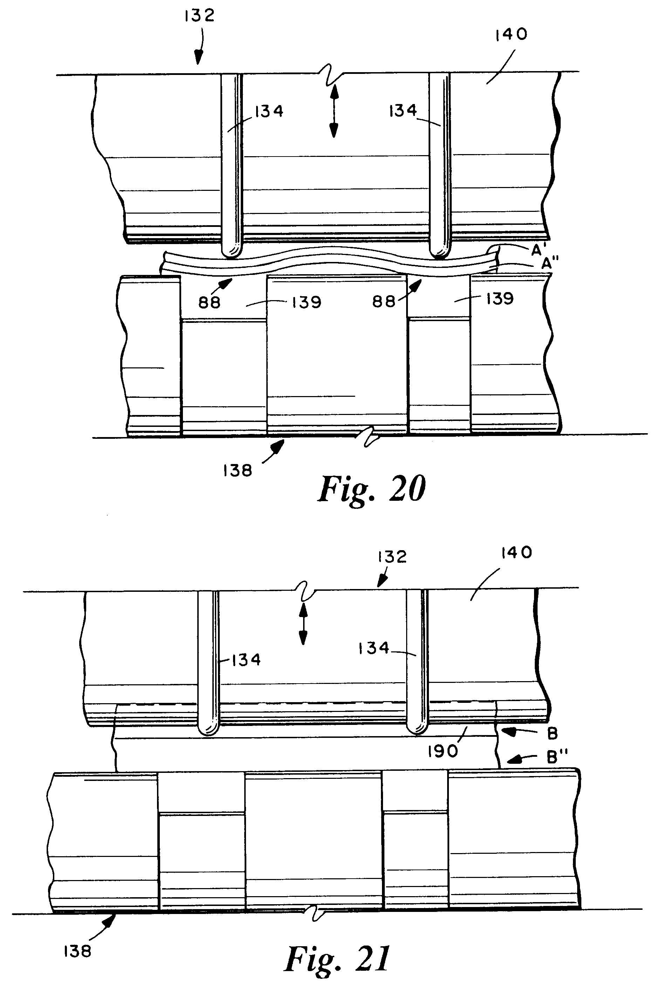

Referring to Figure 20, and when very thin media A′, A″ is being fed through the device, the selector bar 132 is adjusted downwardly toward the grooved second feed roller 138 so that a series of bends 188 are created across the width of the media being fed as indicated in Figure 20, by reason of the cooperation of O-rings 134 and grooves 139. Associated retarding friction between the O-rings 134 and the piece of media A′ next to the bottommost piece of media A″ is greater than the friction holding the two pieces of media A′, A″ together. The driving friction between the feed roller 138 and the bottom piece of media A″ is also greater than the friction holding the bottom two pieces A′, A″ together. Accordingly, the bottom piece A″ is fed by itself and the next piece A′ is held back by the O-rings 134.

In the event relatively thick media B, B′ is being fed through the device as indicated in Figure 21, the O-rings 134 hold back the leading edge 190 of the piece of media B next to the bottom of the stack while the bottom piece B′ is fed to the feed roller 138.

It will thus be seen that according to the present invention a printing assembly for printing discrete media elements has been provided which allows high-speed, high-quality addressing. While the invention has been herein shown and described and was presently conceived to be the most practical and preferred embodiment thereof, it will be apparent to those of ordinary skill in the art that many modifications may be made thereof within the scope of the invention, which scope is to be accorded the broadest interpretation of the appended claims so as to encompass all equivalent structures and devices.

## Claims

1. A printing assembly for printing discrete media elements, comprising

   a plurality of print heads;

   transport elements for moving discrete media elements past said print heads; and

   means for powering said transport elements to effect movement of discrete media elements in a transport direction; the assembly further comprising

   means for holding the discrete elements in positive, non-slipping contact with said transport elements during printing on the discrete elements by said print heads, said holding means comprising at least one transport wiper comprising a smooth surfaced plate having first and second ends spaced from each other in said transport direction with the first end preceding the second end in said transport direction, and lever means mounting said plate such that said plate may move in a first direction substantially perpendicular to said transport direction toward and away from said transport elements.

2. A printing assembly as claimed in Claim 1, wherein said lever means comprises a first lever arm mounted to said first end of said plate and making a first angle with respect to said transport direction, and a second lever arm mounted to said second end of said plate and making a second angle with respect to said first direction; said angles being selected so that there is less force tending to bias said plate into contact with said transport elements at said first end thereof than at said second end, so that the discrete media may readily pass between the plate and the transport elements at said first end thereof, yet is held positively thereby during printing.

3. An assembly as claimed in Claim 2, wherein said first angle is less than said second angle, and/or wherein said lever arms are leaf springs.

4. An assembly as claimed in any preceding claim, wherein said plate has a first surface which engages the transport elements which is smooth, and a second surface opposite the first surface containing sound dampening material.

5. An assembly as claimed in any preceding claim, wherein said transport elements comprise a plurality of transport belts, including belts positioned on opposite sides of said print heads, and wherein said holding means comprise wiper plates mounted in juxtaposition with said belts on said opposite sides of said print heads.

6. An assembly as claimed in any preceding claim, wherein said holding means further comprise a plurality of wiper plates associated with each side of said print head, and arranged in line in said first direction, and spaced from each other in said first direction, said wiper plates each being mounted by lever means.

7. An assembly as claimed in Claim 6, further comprising roller means, spaced from said wiper plates in said first direction, for feeding discrete media to be printed into operative association with said wiper plates and transport elements, said roller means comprising first and second rollers rotatable about substantially parallel axes, substantially perpendicular to said transport direction, and means for spring biasing said rollers together, at leat one of said rollers having a deformable circumferential surface for engaging discrete media elements.

8. An assembly as claimed in Claim 7, wherein the spacing between said roller means and a wiper plate, and between wiper plates on the same side of said print heads, is less than the length of the smallest typical discrete media to be printed with said apparatus.

9. An assembly as claimed in any preceding claim, further comprising flange means extending from opposite sides of said transport wiper, in a direction substantially perpendicular to said transport direction, and turned upwardly with respect to said transport means.

10. A printing assembly for printing discrete media elements, comprising:

a plurality of ink jet print heads which project ink in a first direction from an orifice;

means for mounting said print heads;

transport elements for moving discrete media elements past said print heads; and

means for powering said transport elements to effect movement of discrete media elements in a second direction;

wherein said print head mounting means are arranged to mount said print heads above said transport elements so that said first direction is disposed with respect to said second direction, and so that said print heads are spaced from said transport elements generally in said first direction, so that ink projected by said print heads will not rebound toward said print heads and clog the orifices thereof, yet the print heads will print clearly defined characters.

11. An assembly as claimed in Claim 10, wherein said print head mounting means comprise means for mounting said print heads so that said first direction is at an angle of about 87° with respect to said second direction.

12. An assembly as claimed in Claim 14, wherein said second direction is substantially horizontal, and said first direction is substantially vertical.

13. An assembly as claimed in any of Claims 10 to 12, wherein said transport elements comprise a plurality of endless belts, powered by rollers, and moving in said second direction; and further comprising means for holding the discrete elements in positive, non-slipping contact with said transport elements during printing on the discrete elements by said print heads, said holding means comprising at least one transport wiper comprising a smooth surfaced plate having first and second ends spaced from each other in said first direction with the first end preceding the second end in said second direction, and lever means mounting said plate at said first and second ends thereof so that said plate may move generally in said first direction toward and away from said transport elements.

14. An assembly as claimed in any of Claims 10 to 13, wherein said transport elements comprise at least one endless belt mounted by a roller at the furthermost portion thereof in said second direction; and further comprising an exit roller having an axis of rotation perpendicular to said second direction and generally transverse to said first direction; and further comprising means for mounting said exit roller so that it engages an element of media at said furthermost portion thereof in said second direction so that it is held generally horizontally and does not slide on, and smear, a previously printed and discharged element.

15. An assembly as claimed in any of Claims 10 to 14, further comprising a feed roller and a selector bar spaced from each other a first spacing generally in said first direction, and for feeding discrete media elements to said transport elements, wherein said transport elements have a second spacing from said print head generally in said first direction directly proportional to said first spacing; and further comprising means for simultaneously adjusting said first and second spacings to accommodate different thicknesses of discrete media elements, and so that said first and second spacings always automatically retain the same proportional relationship to each other.

16. An assembly as claimed in Claim 15, wherein said means for simultaneously adjusting said first and second spacings comprise a pair of outer shafts comprising said means for mounting said print heads, and a pair of inner eccentric shafts engaging said outer shafts, an outer portion of said selector bar, and an inner eccentric shaft engaging said outer portion of said selector bar, all of said eccentric shafts having the same eccentricity; and means for tying said inner eccentric shafts together so that rotation of one effects rotation of the others; and means for effecting rotation of one of said eccentric inner shafts.

17. An assembly as claimed in Claim 16, further comprising locking plates associated with each of said outer shafts and selector bar with respect to said inner eccentric shafts so that all inner shafts are aligned substantially parallel with elements below them and can be replaced without disturbing the relative parallel alignment.

18. An assembly as claimed in any preceding claim, further comprising means for feeding discrete media elements to said transport elements, said feeding means comprising: a support for discrete elements; a first feed roller disposed adjacent to said support in said second direction and rotatable about a first axis, generally perpendicular to both said first and second directions; first means for effecting rotation of said first roller about said first axis; a second feed roller disposed on the opposite side of said first feed roller from said support and rotatable about a second axis parallel to said first axis; and second means, distinct from said first means, for effecting rotation of said second roller about said second axis; means for sensing the position of a discrete media element being fed by said feed rollers; and control means for controlling said feed roller rotating means so that said second feed roller is operated substantially continuously, and said first roller is operated intermittently in dependence upon the position of a discrete media element being fed thereby.

19. An assembly as claimed in any preceding claim, having means for mounting said print heads comprising a first carriage for mounting all expect one of said print heads and means for mounting said first carriage for movement in a third direction, substantially perpendicular to both said first and second directions; and a second carriage for mounting one of said print heads, and means for mounting said second carriage for movement in said third direction, and with respect to said first carriage.

20. A printing assembly for printing discrete media elements, comprising:
a plurality of print heads;
transport elements for moving discrete media elements past said print heads;
means for mounting said print heads spaced from said transport elements in a first direction;
means for powering said transport elements to effect movement of discrete media elements in a second direction; and
means for feeding discrete media elements to said transport means, said feeding means comprising: a support for discrete elements; a first feed roller disposed adjacent to said support in said second direction and rotatable about a first axis, generally perpendicular to both said first and second directions; first means for effecting rotation of said first roller about said first axis; a second feed roller disposed on the opposite side of said first feed roller from said support and rotatable about a second axis parallel to said first axis; and second means, distinct from said first means, for effecting rotation of said second roller about said second axis; means for sensing the position of a discrete media element being fed by said feed rollers; and control means for controlling said feed roller rotating means so that second feed roller is operated substantially continuously, and said first roller is operated intermittently in dependence upon the position of a discrete media element being fed thereby.

21. An assembly as claimed in Claim 20, further comprising a selector bar positioned above said second feed roller and defining a predetermined, but adjustable gap generally in said first direction, between the outer peripheral surface thereof and said second roller, and wherein said selector bar may be formed with a plurality of axially spaced grooves for receiving a corresponding number of resilient annular rings such that at least a portion of said rings radially protrude beyond said selector bar.

22. An assembly as claimed in Claim 21, wherein said selector bar has a first abrasive strip thereon positioned to engage a discrete media element as it is being fed to said second roller by said first roller, and a second abrasive strip thereon, circumferentially spaced from said first strip; and further comprising means for mounting said selector bar so that when said first strip wears down said second strip can be positioned with respect to said second roller where said first strip was positioned.

23. An assembly as claimed in any of Claims 20 to 22, wherein said means for feeding said discrete elements further comprises a pair of pinch rollers biased together and located on the opposite side of said second feed roller from said first said feed roller; and wherein said sensing means comprises a sensing element disposed between said second feed roller and said pinch rollers, and wherein at least one of said pinch rollers may have a deformable surface.

24. An assembly as claimed in any of Claims 20 to 23, further comprising friction brake means associated with said first feed roller for stopping rotation of said first roller, due to inertia, once operation of said first rotating means is interrupted.

25. A printing assembly for printing discrete media elements, comprising:
a frame;
a plurality of print heads mounted on said frame;
transport means for moving discrete media elements past said print heads in a second direction;
means for mounting said print heads spaced from said transport means by a first spacing in a first direction, generally transverse to said second direction; and further comprising
a feed roller and a selector bar spaced from each other a second spacing generally in said first direction directly proportional to said first spacing; and

means for simultaneously adjusting said first and second spacings to accommodate different thicknesses of discrete media elements, and so that said first and second spacings automatically always retain the same proportional relationship to each other.

26. An assembly as claimed in Claim 25, wherein said means for simultaneously adjusting said first and second spacings comprise a pair of outer shafts comprising said means for mounting said print heads, and a pair of inner eccentric shafts engaging said outer shafts, an outer portion of said selector bar, and an inner eccentric shaft engaging said outer portion of said selector bar, all of said eccentric shafts having the same eccentricity; and means for tying said inner eccentric shafts together so that rotation of one effects rotation of the others; and means for effecting rotation of one of said eccentric inner shafts.

27. A printing assembly for printing discrete media elements, comprising:

a mounting frame;

a plurality of print heads on said frame;

transport means for moving discrete media elements past said print heads on said mounting frame in a second direction;

means for mounting said print heads on said frame spaced from said transport means in a first direction, generally transverse to said second direction; wherein

said means for mounting said print heads comprising: a first carriage for mounting all except one of said print heads, and means for mounting said first carriage for movement in a third direction, substantially perpendicular to both said first and second directions; a second carriage for mounting one of said print heads, and means for mounting said second carriage for movement in said third direction; and means for mounting said carriages for movement in said first direction.

28. An assembly as claimed in Claim 27, further comprising means for holding the discrete elements in positive non-slipping contact with said transport means during printing on the discrete elements by said print heads, said holding means comprising at least one transport wiper comprising a smooth surfaced plate biased into engagement with said transport elements, and having upwardly slanted side edges, said transport wiper operatively mounted to said platforms for movement in said third direction therewith, said upturned edges of said wiper elements preventing catching of said wiper elements on said transport elements during movement in said third direction.

29. A feed control system for feeding printable sheets into a printer, the system including a sheet feed bin having an opening therein and a feed roller positioned in said opening, and further comprising

a normally non-rotatable selector bar located above said feed roller defining a sheet gate therebetween, said selector bar having a plurality of resilient, annular friction components axially spaced therealong for frictionally engaging and holding back a sheet stacked on an underlying sheet being fed.

30. A feed control system as claimed in Claim 29, wherein said friction components comprise rubber rings and further wherein said selector bar is formed with a plurality of axially spaced grooves for receiving respective ones of said resilient annular rings, and wherein at least a portion of said rings extend radially beyond the selector bar.

31. A feed control system as claimed in Claim 29 or 30, wherein said feed roller is provided with a corresponding plurality of grooves, and said resilient annular rings protrude into said plurality of grooves in said feed roller.

32. A feed control system as claimed in any of Claims 29 to 31, wherein means are provided for rotating said selector bar to present a different portion of said resilient annular rings to said grooves in said feed roller, and wherein said means for rotating may comprise a split sleeve portion of said selector bar receivable over a relatively stationary insert, and a locking collar for loosening or locking said selector bar relative to said insert.

*Fig. 1*

*Fig. 3*

Fig. 2 a

Fig. 2b

## Fig. 4a

## *Fig. 4 b*

*Fig. 5*

*Fig. 12*

*Fig. 6*

*Fig. 7*

*Fig. 8*

*Fig. 9*

## Fig. 10

## Fig. 11

*Fig. 13*

*Fig. 14*

Fig. 15

Fig. 16

EP 0 480 719 A2

*Fig. 17*

*Fig. 18*

68

74

150

127

144

148

166

148

*Fig. 19a*

144

148

146

148

*Fig. 19b*

80

178

174

176

176

178

*Fig. 19c*

178'

172

168

170

172

178'

*Fig. 19d*

132        140
134    134
A'
A''
88    139    88    139
138

**_Fig. 20_**

132    140
134    134
190    B
B''
138

**_Fig. 21_**